# EUROPÄISCHE PATENTSCHRIFT

(11) **EP 2 496 860 B1**
(45) Veröffentlichungstag und Bekanntmachung des Hinweises auf die Patenterteilung: **05.03.2014**
(21) Anmeldenummer: 10768724.6
(22) Anmeldetag: 13.10.2010
(51) Int. Cl.: F16H 63/20

(54) **MEHRGRUPPENGETRIEBE**
MULTI-GROUP TRANSMISSION
BOÎTE DE VITESSES À PLUSIEURS GROUPES

(30) Priorität: 03.11.2009 DE 102009046345
(43) Veröffentlichungstag der Anmeldung: 12.09.2012
(73) Patentinhaber: ZF Friedrichshafen AG, 88038 Friedrichshafen (DE)
(72) Erfinder: BIRK, Reinhard, 88142 Wasserburg (DE); HEINZELMANN, Jochen, 88074 Meckenbeuren (DE)
(86) Internationale Anmeldenummer: PCT/EP2010/065299
(87) Internationale Veröffentlichungsnummer: WO 2011/054636

(56) Entgegenhaltungen:
- DE-A1- 3 202 590
- DE-A1- 10 253 471
- DE-A1-102006 015 661
- DE-A1-102007 024 793
- DE-A1-102007 046 737
- US-A- 4 986 142

## Beschreibung

Die Erfindung betrifft ein Mehrgruppengetriebe gemäß dem Oberbegriff des Patentanspruchs 1.

In Kraftfahrzeugen mit Stufengetrieben haben sich Schaltvorrichtungen mit Schaltbildern in so genannten H-Formen zur Bedienung des Getriebes mit einem Schalthebel bewährt. Solche Schaltbilder, mit in Schaltgassen zumindest näherungsweise gegenüberliegenden Gängen, werden erfahrungsgemäß vom Fahrer intuitiv erfasst und als logisch empfunden. Mit steigender Anzahl der Gänge können sich grundsätzlich Einfach-H-, Doppel-H- oder Mehrfach-H-Schaltbilder ergeben. Deren technische Realisierung wird allerdings mit zunehmender Gangzahl komplexer, da innerhalb einer Schaltgasse aufeinander folgende Gänge, je nach Getriebestruktur, sowohl mit gleichen als auch mit verschiedenen, in der Regel aus Schiebemuffen und Synchronringen gebildeten, Schaltpaketen betätigbar sein können. Dies erfordert Konvertierungsmittel, mittels denen die beim Auslegen eines Ganges durch eine Schalthebelbewegung in einer Schaltgasse ein bestimmtes Schaltpaket betätigt wird, während beim Einlegen eines neuen, gegenüberliegenden Ganges durch eine gegenläufige Schalthebelbewegung in der gleichen Schaltgasse ein anderes Schaltpaket betätigt wird.

Ein solches mehrstufiges Getriebe mit einer mechanischen Konvertierungseinrichtung ist aus der DE 102 53 471 A1 bekannt. Darin ist ein Schalthebel mit einer axial verschiebbaren und um ihre Längsachse drehbaren Schaltfingerwelle gekoppelt. Die Schaltfingerwelle durchsetzt eine Öffnung von mit Schaltstangen verbundenen Schaltrahmen bzw. Mitnehmern. Die Schaltstangen sind an ihrem freien Ende mit Schaltgabeln verbunden, die in Schiebemuffen von Schaltpaketen eingreifen.

An der Schaltfingerwelle sind ein Schaltfinger oder zwei Schaltfinger je Mitnehmer angeordnet, wobei jeder Mitnehmer jeweils eine Aussparung unterhalb und eine Aussparung oberhalb seiner Verfahrachse aufweist. Die Schaltfinger sind als nockenartige radiale Vorsprünge mit der Schaltfingerwelle verbunden. Die Aussparungen der rahmenförmigen Mitnehmer besitzen jeweils eine gerade Seite als Schaltkontur in Gangeinschaltrichtung und eine gekrümmte Seite als Freilaufkontur entgegen der Gangeinschaltrichtuhg. Bei einem Gangwechsel führt das Herausnehmen des eingelegten Ganges durch eine entsprechende Schalthebelbewegung in der aktuellen Schaltgasse mit Hilfe eines zugeordneten Mitnehmers zu einem Herausnehmen des Ganges im Getriebe.

Beim Durchschalten zum nächsten Gang in der gleichen Schaltgasse erfolgt parallel dazu ein Weiterdrehen der Schaltfingerwelle in der gleichen Drehrichtung, die das Einlegen des Ganges im Getriebe mit Hilfe eines zweiten Mitnehmers bewirkt. Beide beteiligten Mitnehmer können sich, je nach Gangwechsel, in die gleiche Schaltrichtung, d.h. beide nach rechts oder beide nach links, oder in unterschiedliche Schaltrichtungen, d.h. der eine Mitnehmer nach rechts und der andere Mitnehmer nach links bewegen. Im letzteren Fall fungiert das Schaltfingersystem als Konvertierungseinrichtung. Durch eine geeignete Anordnung und Ausrichtung einer bestimmten Anzahl von Schaltfingern auf der Schaltfingerwelle, wobei diese Anzahl je nach Gangstruktur der Anzahl der Getriebegänge entspricht aber auch geringer sein kann, sowie mit einem Mitnehmer für jeweils zwei Gänge, wird mit nur einer Schaltfingerwelle ein H-Schaltbild, beispielsweise eines Doppelkupplungsgetriebes mit sechs oder sieben Vorwärtsgängen und einem Rückwärtsgang, ermöglicht.

Eine ähnliche Getriebeschaltvorrichtung ist aus der DE 32 02 590 A1 bekannt, bei der ebenfalls Schaltfinger einer Schaltwelle in Ausnehmungen von rahmenartigen Mitnehmern greifen. Auch bei dieser Getriebeschaltvorrichtung ist an jedem rahmenartigen Mitnehmer oberhalb bzw. unterhalb einer Verfahrachse derselben jeweils nur eine Ausnehmung zum Eingriff der jeweiligen Schaltfinger ausgebildet.

Grundsätzlich sind auch bei Mehrgruppengetrieben H-Schaltbilder für eine Handschaltvorrichtung des Getriebes bereits bekannt. Getriebe in Gruppenbauweise, mit einer Hauptgruppe und gegebenenfalls einer vorgeschalteten Splitgruppe in Vorgelegebauweise sowie einer vor- oder nachgeschalteten Bereichsgruppe, meistens in Planetenbauweise, werden insbesondere bei Nutzfahrzeugen eingesetzt, die eine relative hohe Anzahl von Übersetzungsstufen benötigen. Ein solches Mehrgruppengetriebe ist beispielsweise aus der US 4 986 142 A bekannt. Üblicherweise ermöglicht die Bereichsgruppe eine Umschaltung zwischen zwei Gangbereichen, indem das Planetengetriebe im Block umläuft oder eine seiner Komponenten festgehalten wird. Die Umschaltung der Bereichsgruppe kann über eine Getriebesteuerung durch eine hydraulische oder pneumatische Betätigung geeigneter Schaltelemente erfolgen. Die Splitgruppe ermöglicht eine Umschaltung zwischen zwei Eingangskonstanten. Die Umschaltung der Splitgruppe erfolgt ebenfalls hydraulisch oder pneumatisch. Die Gesamtanzahl der Gänge ist in der Regel durch die Gangzahl der handgeschalteten Hauptgruppe bestimmt. Diese ist bei den heute gängigen Gruppengetrieben entweder drei- oder vierstufig, so dass sich 6- bw.12-Gang-Getriebe oder 8- bzw. 16-Gang-Getriebe ergeben.

Bei Mehrgruppengetrieben mit einem Handschaltteil als Hauptgruppe, welches eine gerade Anzahl von Vorwärtsgängen aufweist, sind bereits Doppel-H-Schaltbilder und Überlagert-H-Schaltbilder bekannt. Bei einem Doppel-H-Schaltbild, wie beispielsweise in der DE 10 2007 046 737 A1 beschrieben, erfolgt das Umschalten der Gangbereiche über eine Wählbewegung des Schalthebels in Wählrichtung. Bei einem Überlagert-H-Schaltbild, also mit zwei zueinander überlagerten H-Ebenen, erfolgt die Umschaltung des Gangbereiches, d.h. der Bereichsgruppe über ein zusätzliches Bedienelement, beispielsweise einen Vorwahlschalter am Schaltknauf des Schalthebels oder selbsttätig über eine Regeleinrichtung mit Hilfe einer Drehzahlsensorik, wie beispielsweise in der DE 10 2007 024 793 A1 beschrieben. Hierdurch ist die Gefahr von Schaltfehlern bei häufigen und kurz aufeinander folgenden Bereichsumschaltungen durch Vergessen der Betätigung des Vorwahlschalters vermieden und ein höherer Schaltkomfort erreicht.

Hingegen sind bei Mehrgruppengetrieben mit einem Handschaltteil, welches eine ungerade Anzahl von Vorwärtsgängen aufweist, bisher nur Überlagert-H-Schaltbilder bekannt. Dabei ergibt sich zusätzlich zu der eher umständlichen und unkomfortablen manuellen oder relativ aufwendigen automatischen H-Ebenen-Umschaltung ein für den Fahrer eher unlogisch erscheinendes Schaltbild, da bei zumindest einem Schaltvorgang zum Gangwechsel zwischen zwei aufeinanderfolgenden Gängen, der Schalthebel über zwei Schaltgassen in gleicher Schalthebelrichtung bewegt werden muss. Der Fachmann findet in den eingangs erwähnten Druckschriften auch keine Hinweise, dies bei einem Gruppengetriebe mit ungerader Gangzahl im Handschaltteil zu umgehen.

Zudem ist der zur Verfügung stehende Bauraum in heutigen Getrieben, auch hinsichtlich der axialen Baulänge von Schaltfingersystemen zunehmend begrenzt, welches bei der Konzeption von Konvertierungseinrichtungen im Schaltsystem zu berücksichtigten ist.

Vor diesem Hintergrund liegt der Erfindung die Aufgabe zugrunde, ein Mehrgruppengetriebe mit einer handgeschalteten Hauptgruppe mit einer ungeraden Anzahl von Vorwärtsgängen und einer Bereichsgruppe mit einer Umschaltung des Handschaltteils zwischen zwei Gangbereichen zu schaffen, dessen Schaltvorrichtung eine komfortable und einfache Bedienung mit einem logischen Schaltbild der durch das Handschaltteil mit Bereichsumschaltung zur Verfügung stehenden Gänge ermöglicht, und die eine kompakte Bauform besitzt.

Die Lösung dieser Aufgabe ergibt sich aus den Merkmalen des Hauptanspruchs, während vorteilhafte Ausgestaltungen und Weiterbildungen der Erfindung den Unteransprüchen entnehmbar sind.

Der Erfindung liegt die Erkenntnis zugrunde, dass bei einem Gruppengetriebe mit einer ungeraden Anzahl von Vorwärtsgängen im Handschaltteil und einer zuschaltbaren Bereichsgruppe, mit Hilfe geeignet ausgebildeter und ausgerichteter Schaltfinger sowie zugehöriger Mitnehmer mit mehreren Eingriffsmöglichkeiten eine derartige Variabilität einer Schaltaktuatorik bei der notwendigen Konvertierung der Schaltrichtung und Ansteuerung gemeinsamer und verschiedener Schaltpakete der Gänge erreichbar ist, dass eine für den Fahrer komfortabel zu bedienende Schalteinrichtung mit einer logischen Bewegungsabfolge zum Durchschalten der Gänge ermöglicht wird.

Demnach geht die Erfindung aus von einem Mehrgruppengetriebe, welches zumindest eine handschaltbare Hauptgruppe mit einer ungeraden Anzahl von Vorwärtsgängen und eine Bereichsgruppe zur Umschaltung zwischen zwei Gangbereichen aufweist, mit einem Schalthebel, dem ein Schaltbild zugeordnet ist, welches eine Wählgasse und mehrere Schaltgassen mit gegenüberliegenden Gängen aufweist, über den eine Schaltfingerwelle, die mehrere Schaltfinger trägt, um ihre Längsachse verschwenkbar sowie axial verschiebbar ist, so dass, je nach Schalthebelbewegung, zum Schalten eines Ganges ein Schaltfinger in einen zugehörigen rahmenförmigen Mitnehmer eingreift, um ein über eine Schaltstange mit dem Mitnehmer gekoppeltes Schaltpaket in einer entsprechenden Schaltrichtung zu betätigen, und mit mechanischen Mitteln zur Umkehr der Schaltrichtung sowie zum Schalten von Gängen, die in einer Schaltgasse gegenüberliegen und von verschiedenen Schaltpaketen angesteuert sind, wobei die Schaltfinger als Einzelschaltfinger mit jeweils einem Fingerelement oder als Doppelschaltfinger mit jeweils zwei in einer Ebene liegenden, zueinander versetzt angeordneten Fingerelementen ausgebildet sind, wobei die rahmenförmigen Mitnehmer oberhalb und unterhalb einer durch die Schaltstangen verlaufenden Verfahrachse Aussparungen zum Eingreifen der Einzelschaltfinger oder der Doppelschaltfinger aufweisen, wobei mittels der Fingerelemente die Mitnehmer wahlweise in zwei entgegengesetzte Schaltrichtungen betätigbar sind und/oder eine jeweilige Schaltrichtung umkehrbar ist, so dass die Gänge der beiden Gangbereiche in einem Mehrfach-H-Schaltbild aufeinanderfolgend mit alternierenden Schalthebelbewegungen schaltbar sind, wobei eine Umschaltung des Gangbereichs über eine Wählbewegung des Schalthebels ansteuerbar ist.

Zur Lösung der gestellten Aufgabe ist vorgesehen, dass wenigstens einer der Mitnehmer mehr als zwei der Aussparungen zum Eingreifen der Fingerelemente der Einzelschaltfinger oder der Doppelschaltfinger aufweist.

Unter einem Mehrfach-H-Schaltbild ist ein Schaltbild zu verstehen, bei dem die H-Grundform, welche zwei senkrechte Schaltgassen und eine waagerechte Wählgasse aufweist, um zwei oder mehr senkrechte Schaltgassen erweitert ist, wobei die Bezeichnung Mehrfach-H-Schaltbild auch ein Doppel-H-Schaltbild umfasst.

Durch das erfindungsgemäße Schaltfingersystem wird eine Doppel- oder Mehrfach-H-Schalteinrichtung insbesondere für ein 6- oder 12-gängiges Gruppengetriebe mit drei synchronisierten Vorwärtsgängen im Hauptgetriebe zur Verfügung gestellt, so dass ein zügiges und komfortables Durchschalten der Gänge ohne Schaltlücke möglich ist.

Es haben sich zwei Schaltbildvarianten als besonders vorteilhaft erwiesen, bei denen die Bereichsumschaltung jeweils zwischen dem dritten und dem vierten Gang mit einer Bewegung des Schalthebels in Wählrichtung automatisch erfolgt. Dabei entspricht der vierte Gang dem ersten Gang, der fünfte Gang dem zweiten Gang und der sechste Gang dem dritten Gang mit jeweils alternativ zugeschalteter Bereichsgruppe. Falls eine zusätzliche Splitgruppe vorgeschaltet ist, kann jeder dieser sechs Gänge über ein separates Bedienelement nochmals in eine Zwischenstufe untersetzt werden, so dass sich insgesamt 12 Gänge ergeben.

Bei einem solchen bestehenden Getriebe kann erfindungsgemäß ein erstes Schaltbild vorgesehen sein, bei dem in einer ersten Schaltgasse ein Rückwärtsgang und ein erster Vorwärtsgang über ein gemeinsames Schaltpaket schaltbar sind, nach einer ersten Wählbewegung des Schalthebels in einer zweiten Schaltgasse ein zweiter Vorwärtsgang und ein dritter Vorwärtsgang über ein gemeinsames Schaltpaket schaltbar sind, nach einer zweiten Wählbewegung des Schalthebels mit einer Bereichsumschaltung und einer Schaltrichtungsumkehr in einer dritten Schaltgasse ein vierter Vorwärtsgang und ein fünfter Vorwärtsgang über unterschiedliche Schaltpakete schaltbar sind, und nach einer dritten Wählbewegung des Schalthebels in einer vierten Schaltgasse ein sechster Vorwärtsgang schaltbar ist.

Dies lässt sich vorteilhaft mit einem Schaltfingersystem realisieren, bei dem ein erster Mitnehmer den ersten Gang, den vierten Gang sowie den Rückwärtsgang und ein zweiter Mitnehmer die Gänge zwei, drei fünf und sechs beaufschlagt, wobei für die erste und die zweite Schaltgasse jeweils ein Doppelschaltfinger sowie für die dritte und die vierte Schaltgasse insgesamt drei Einzelschaltfinger vorgesehen sind.

Die Schaltfinger können als auf der Schaltfingerwelle befestigte Ringe, die mit ihren Fingerelementen einstückig verbunden sind, ausgebildet sein, wobei die Fingerelemente nasenartig radial nach außen vorstehen. Die zugehörigen, rahmenartigen Mitnehmer weisen kreisförmige oder kreisähnliche Öffnungen zur Aufnahme der Schaltfingerwelle auf, an denen die Aussparungen zum Eingriff der Fingerelemente ausgebildet sind.

Die Schaltvorrichtung kann dadurch gekennzeichnet sein, dass wenigstens ein Mitnehmer eine Aussparung unterhalb sowie zwei Aussparungen oberhalb seiner Verfahrachse aufweist.

In einer anderen Ausführungsform besitzen die Mitnehmer jeweils vorteilhaft vier Aussparungen für einen Doppelschaltfinger, wobei zwei Aussparungspaare oberhalb und unterhalb einer Verfahrachse des Mitnehmers gegenüberliegend angeordnet sind. Benachbarte Aussparungen am Mitnehmer können durch einen nach radial innen verlängerten zahnartigen Vorsprung getrennt sein, wobei der Vorsprung in Gangeinschaltrichtung von dem jeweiligen Fingerelement beaufschlagt wird und entgegen der Gangeinschaltrichtung ein Freilauf vorliegt.

Durch Eingreifen des Doppelfingers in das eine oder das andere Aussparungspaar kann der Mitnehmer bei einer Rechts- oder einer Linksverschwenkung der Schaltfingerwelle in die eine oder die andere Schaltrichtung bewegt werden. Demnach ist vorgesehen, dass mittels eines Doppelschaltfingers zum einen der Mitnehmer nach rechts oder nach links verfahren werden kann, und zum anderen bei einem entsprechend gedreht ausgerichteten Doppelschaltfinger mit einem Eingriffswechsel von unten nach oben bei gleichem Drehsinn der Schaltfingerwelle umgekehrt nach links oder nach rechts verfahren werden kann. Diese Anordnung bietet eine größtmögliche Flexibilität für die Beaufschlagung der Mitnehmer und damit der jeweiligen Schaltpakete.

Um lediglich eine Schaltrichtungsumkehr zu bewirken, genügt hingegen eine Kombination aus einer unteren und einer oberen Aussparung, wobei je nach Ausrichtung des jeweiligen Einzelfingers jeweils nur eine Schaltrichtung möglich ist.

Durch axiales Verschieben und Verdrehen der Schaltfingerwelle werden somit, je nach Schalt- und Wählbewegung des Schalthebels die Mitnehmer in die eine oder andere Schaltrichtung verfahren, die Schaltrichtung umgekehrt oder eine Neutralposition eingenommen. Um zu gewährleisten, dass ein Mitnehmer im Freilauf nicht unbeabsichtigt verfahren wird, kann zudem an den Einzelschaltfingern und an den Doppelschaltfingern wenigstens ein Neutralfinger ausgebildet sein, an den sich zur Sicherung einer Neutralposition die Wand der Öffnung des zugeordneten Mitnehmers in einem eingriffslosen Zustand anlehnen kann.

Eine besonders kompakte Bauform lässt sich bei diesem Schaltbild auch mit einem Schaltfingersystem erreichen, bei dem für die erste und die zweite Schaltgasse, in Betätigungsposition senkrecht zu einer Verfahrachse der Mitnehmer stehende, unterhalb der Verfahrachse angeordnete Einzelschaltfinger für einen unteren Eingriff sowie für die dritte und die vierte Schaltgasse insgesamt drei in Betätigungsposition schräg zur Verfahrachse der Mitnehmer stehende, oberhalb der Verfahrachse angeordnete Schaltfinger für einen oberen Eingriff vorgesehen sind, wobei vorzugsweise der obere Eingriff einen über eine geeignete Konturierung eingeschränkten Freilauf aufweist.

Ein zweites logisches Schaltbild bei einem Gruppengetriebe mit einer dreistufigen Hauptgruppe kann realisiert werden, indem in einer ersten Schaltgasse ein Rückwärtsgang, nach einer ersten Wählbewegung des Schalthebels mit einer Schaltrichtungsumkehr in einer zweiten Schaltgasse ein erster Vorwärtsgang und ein zweiter Vorwärtsgang über unterschiedliche Schaltpakete, nach einer zweiten Wählbewegung des Schalthebels in einer dritten Schaltgasse ein dritter Vorwärtsgang, nach einer dritten Wählbewegung des Schalthebels mit einer Bereichsumschaltung in einer vierten Schaltgasse ein vierter Vorwärtsgang, und nach einer vierten Wählbewegung des Schalthebels in einer fünften Schaltgasse ein fünfter Vorwärtsgang und ein sechster Vorwärtsgang über ein gemeinsames Schaltpaket schaltbar ist. Ein entsprechendes Schaltfingersystem weist für die fünfte Schaltgasse einen Doppelschaltfinger und für die übrigen vier Schaltgassen insgesamt fünf Einzelschaltfinger auf.

Beide beschriebenen Schaltbilder können jeweils auch als spiegelverkehrte Varianten realisiert werden, so dass wahlweise das Schaltbild von links nach rechts oder von rechts nach links verläuft.

Schließlich sei angemerkt, dass die Schaltvorrichtung gemäß der Erfindung zwar besonders für ein Gruppengetriebe mit einem dreigängigen Handschaltteil geeignet ist, grundsätzlich aber auch eine Erweiterung auf eine 5-gänge Hauptgruppe möglich ist. So kann diese Schaltvorrichtung zum Schalten eines 12-Gang-Mehrgruppengetriebes mit einer dreistufigen Hauptgruppe, einer zweistufigen Bereichsgruppe und einer zweistufigen Splitgruppe ausgebildet sein, wobei die über das Mehrfach-H-Schaltbild schaltbaren Gänge durch ein Umschalten zweier Eingangskonstanten der Splitgruppe des Mehrgruppengetriebes mittels eines separaten Bedienelementes jeweils in zwei Übersetzungsstufen unterteilbar sind. Zudem ist auch eine Anwendung der erfindungsgemäßen Schaltvorrichtung bei anderen Getrieben möglich.

Zur weiteren Verdeutlichung der Erfindung ist der Beschreibung eine Zeichnung eines Ausführungsbeispiels beigefügt. In dieser zeigt
- Fig. 1: ein Schaltfingersystem für eine Mehrfach-H-Schaltvorrichtung für ein Mehrgruppengetriebe in einer perspektivischen Ansicht,
- Fig. 2: eine Anordnung von Schaltfingern des Schaltfingersystems,
- Fig. 3: einen Schaltfinger im Eingriff mit einem Mitnehmer,
- Fig. 4: drei Schaltpositionen des Schaltfingers im Eingriff mit dem Mitnehmer,
- Fig. 5a: ein erstes Schaltbild mit einem zugehörigen Aktuatorschema,
- Fig. 5b: ein zu dem ersten Schaltbild spiegelverkehrtes Schaltbild mit einem zugehörigen Aktuatorschema,
- Fig. 6a: ein zweites Schaltbild mit einem zugehörigen Aktuatorschema,
- Fig. 6b: ein zu dem ersten Schaltbild spiegelverkehrtes Schaltbild mit einem zugehörigen Aktuatorschema, und
- Fig. 7: eine zweite Ausführungsform eines Schaltfingersystems für ein Schaltbild gemäß Fig. 5a bzw. Fig. 5b im Querschnitt.

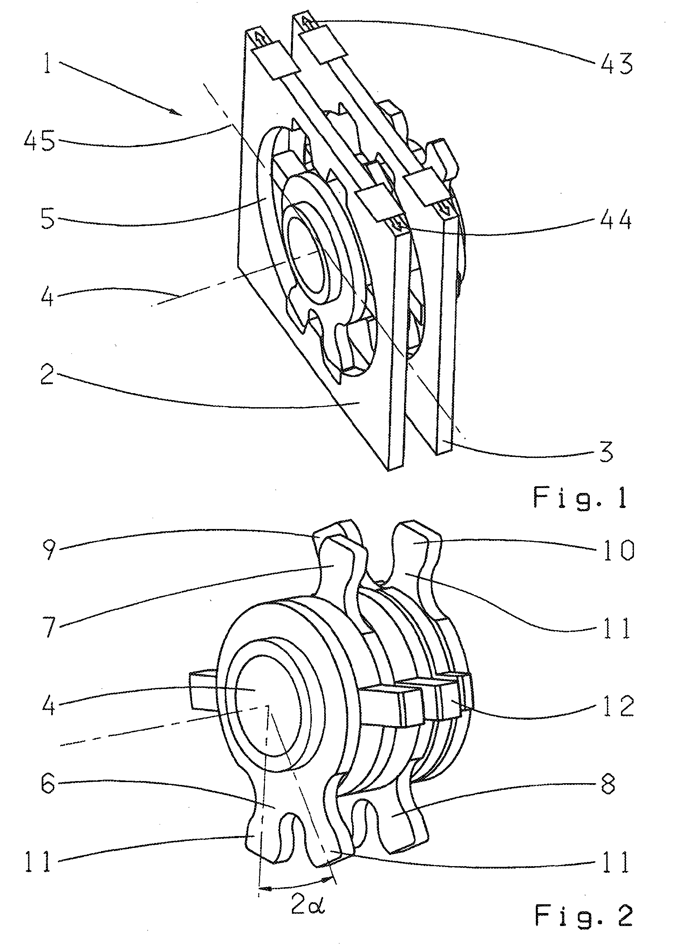

Demnach ist in Fig. 1 ein Schaltfingersystem 1 für ein Mehrgruppengetriebe mit einer handgeschalteten 3-Gang-Hauptgruppe in Vorgelegebauweise und einer zuschaltbaren, nachgeordneten, zweistufigen Bereichsgruppe in Planetenbauweise, über welche die drei Vorwärtsgänge abtriebsseitig zusätzlich übersetzbar sind, dargestellt.

Das Getriebe weist ein erstes gemeinsames Synchronschaltpaket für einen Rückwärtsgang und den ersten Vorwärtsgang sowie ein zweites gemeinsames Synchronschaltpaket für den zweiten Vorwärtsgang und den dritten Vorwärtsgang auf. Eine Zahnradebene des dritten Vorwärtsganges kann gleichzeitig als eine von zwei Eingangskonstanten einer vorgeschalteten Splitgruppe fungieren, so dass insgesamt 12 Vorwärtsgangübersetzungen wählbar sind. Die ähnliche grundsätzliche Getriebestruktur ist beispielsweise aus der nicht vorveröffentlichten DE 10 2008 001 200.9 bekannt, dort allerdings mit Klauenschaltpaketen anstelle von Synchronpaketen. Die Beschreibung beschränkt sich daher nachfolgend auf erfindungsgemäße Schaltfingersysteme zur Realisierung von Doppel- bzw. Mehrfach-H-Schalt-bildern für eine solche Getriebestruktur.

Das Schaltfingersystem 1 weist zwei rahmenförmige, mit Öffnungen 5 versehene Mitnehmer 2, 3 bzw. Schaltrahmen auf, die von einer in Fig. 1 nur angedeuteten Schaltfingerwelle 4 durchsetzt sind. Nicht dargestellt sind seitlich an den Mitnehmern 2, 3 bzw. Schaltrahmen angeordnete Schaltstangen, die in üblicher Weise mittels Schaltgabeln in Schiebemuffen der Synchronschaltpakete eingreifen. Auf den Rahmenoberseiten sind die Gänge angedeutet, die mit dem jeweiligen Mitnehmer 2, 3 betätigbar sind sowie die beiden Schaltrichtungen 43, 44, in welche die Mitnehmer 2, 3 längs ihrer Verfahrachse 45 verschiebbar sind. Auf der Schaltfingerwelle 4 sind mehrere Schaltfinger 6, 7, 8, 9, 10 (Fig. 2) drehfest angeordnet, welche zum Betätigen der Mitnehmer 2, 3 dienen.

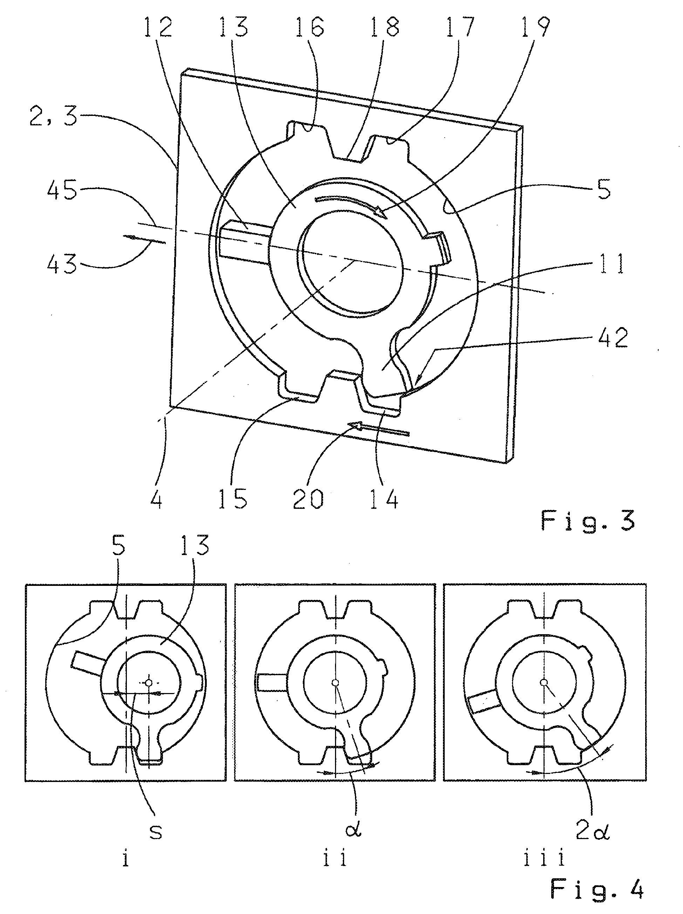

Die Anordnung der Schaltfinger auf der Schaltfingerwelle 4 ist in Fig. 2 dargestellt. Diese besteht in Blickrichtung aus einem ersten Doppelschaltfinger 6, einem ersten Einzelschaltfinger 7, einem zweiten Doppelschaltfinger 8, einem zweiten Einzelschaltfinger 9 und einem dritten Einzelschaltfinger 10. Die Doppelschaltfinger 6, 8 besitzen jeweils zwei in einer Ebene liegende, radial nach außen zeigende Fingerelemente 11, welche einen Winkel von 2α einschließen, wobei die Winkelhalbierende senkrecht zur Verfahrachse 45 der Mitnehmer 2, 3 steht. Die Einzelschaltfinger 7, 9, 10 besitzen jeweils ein solches Fingerelement 11, welches unter dem Winkel α bzw. -α angeordnet ist. Weiterhin sind den Schaltfingern 6, 7, 8, 9, 10 Neutralfinger 12 zugeordnet, die den bzw. die Mitnehmer 2, 3 im eingriffslosen Zustand, d.h. in einem Freilauf 42 (Figuren 3 und 4), in einer Neutralposition halten.

Zur Verdeutlichung des Mitnehmereingriffs ist in Fig. 3 ein Mitnehmer 2, 3 mit einem Einzelschaltfinger 13 dargestellt. Der Mitnehmer 2, 3 weist vier Aussparungen 14, 15, 16, 17 auf, die als zwei gegenüberliegende Paare angeordnet sind, so dass sie mit den Fingerelementen 11 korrespondieren. Die Aussparungspaare 14/15 bzw. 16/17 sind jeweils durch einen radial nach innen verlängerten Vorsprung 18 voneinander getrennt, der als Angriffsfläche für das jeweilige Fingerelement 11 dient. Die Pfeile 19, 20 deuten eine Verdrehrichtung der Schaltfingerwelle 4 und eine dazugehörige Verfahrbewegung des Mitnehmers 2, 3 in Schaltrichtung 43 (Fig. 1) an. Bei einem Eingriff in die oberen Aussparungen 16, 17 dreht sich die Schaltrichtung im Gegensatz zu einem Eingriff in die unteren Aussparungen 14, 15 bei Beibehaltung der Verdrehrichtung der Schaltfingerwelle 4 entgegengesetzt zur Schaltrichtung 43 um.

Fig. 4 zeigt drei mögliche Schaltpositionen i, ii, iii der Anordnung von Fig. 3. Die Schaltpositionen sind dadurch einstellbar, dass zunächst durch axiales Verschieben der Schaltfingerwelle 4 der Schaltfinger 13 axial in der Mitnehmeröffnung 5 bzw. das Fingerelement 11 in der Aussparung 14 positioniert wird. In der Position i ist der Mitnehmer 2, 3 durch Verdrehen der Schaltfingerwelle 4 um einen Schaltweg s gegenüber einer Neutralposition ii verfahren, so dass das Fingerelement 11 senkrecht zur Verfahrachse 45 des Mitnehmers 2, 3 steht. In dieser Position ist ein zugehöriger Gang eingeschaltet. Der Neutralfinger 12 ist in dieser Stellung von der Begrenzung der Öffnung 5 deutlich beabstandet.

In der Neutralposition ii ist der Schaltfinger 13 um einen Schaltwinkel α zurück gedreht. Diese Position entspricht einer Startposition für den Freilauf 42, der entgegen der Schaltrichtung bzw. Gangeinschaltrichtung vorliegt. Der Neutralfinger 12 hat bei dieser Position lediglich einen minimalen Abstand zur Begrenzung der Öffnung 5 des Mitnehmers 2, 3. Ab dieser Position hält der Neutralfinger 12 den Mitnehmer 2, 3 fest und verhindert so ein unbeabsichtigtes Mitführen des Mitnehmers 2, 3. Bei einer Endposition iii des Freilaufs ist der Schaltfinger 13 um den doppelten Winkel 2α aus der Gangeinschaltposition herausgedreht.

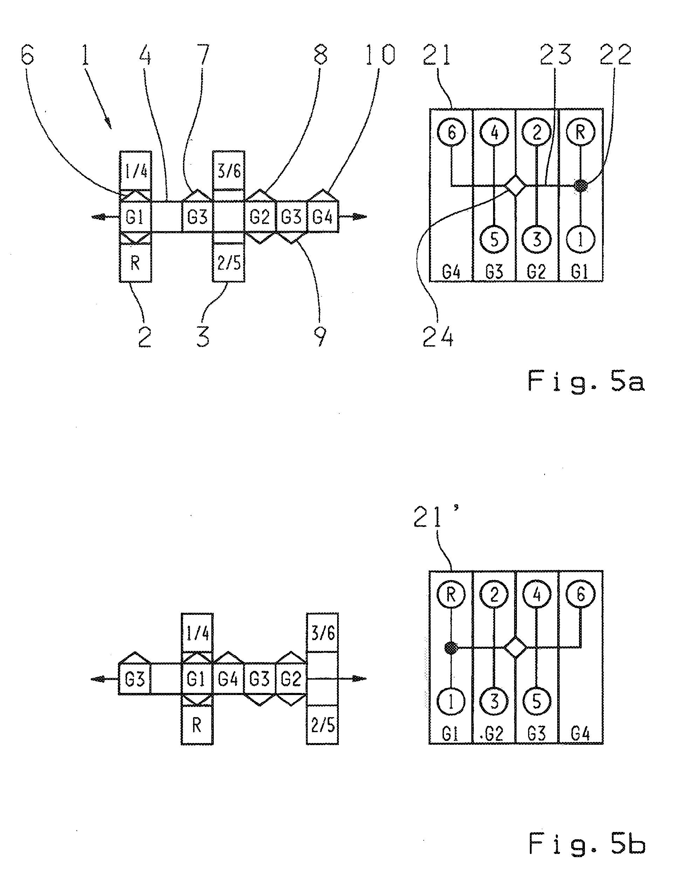

In Fig. 5a ist ein erfindungsgemäßes Schaltbild 21 (rechte Bildhälfte) und ein zugehöriges Aktuatorschema (linke Bildhälfte) dargestellt. Das Schaltbild 21 korrespondiert mit dem Schaltfingersystem 1 aus Fig. 1 und Fig. 2. Ein nicht dargestellter Schalthebel befindet sich in der dargestellten Momentaufnahme in einer Schaltposition 22 in einer ersten Schaltgasse G1. Dem entsprechend ist der Doppelschaltfinger 6 im ersten Mitnehmer 2 positioniert. Die Schaltfinger 6, 7, 8, 9, 10 sind jeweils mit den Schaltgassen G1, G2, G3, G4 gekennzeichnet, in denen sie betätigt werden. Die Pfeilspitzen an den Schaltgassenpositionen G1, G2, G3, G4 in Fig. 5 zeigen diejenigen Richtungen, in welche die Mitnehmer 2, 3 durch die jeweiligen Schaltfinger 6, 7, 8, 9, 10 verschoben werden können.

Das Durchschalten der Gänge bei dem Schaltbild 21 erfolgt nach folgendem Schema:

In der Gasse G1 werden der Rückwärtsgang R und der erste Vorwärtsgang über den ersten Doppelschaltfinger 6 geschaltet. Der Schalthebel wird anschließend in einer Wählgasse 23 in Wählrichtung nach Gasse G2 bewegt. In der Gasse G2 werden die Gänge zwei und drei über den zweiten Doppelschaltfinger 8 geschaltet, welcher über eine axiale Verschiebung der Schaltfingerwelle 4 in den zweiten Mitnehmer 3 eingreift. Die Gänge der Gassen G1 und G2 werden jeweils über ein gemeinsames Synchronpaket geschaltet. In Wählrichtung nach Gasse G3 erfolgt anschließend durch Zuschalten der Bereichsgruppe eine Umschaltung 24 des Gangbereichs von den unteren Gängen eins bis drei zu den oberen Gängen vier bis sechs.

In der Gasse G3 wird die Schaltrichtung im Getriebe umgekehrt, um in logischer Gangfolge weiterschalten zu können. Dementsprechend korrespondieren die in den folgenden Gassen G3 und G4 schaltenden Einzelschaltfinger 7, 9, 10 mit den oberen Aussparungen 16, 17 der Mitnehmer 2, 3 im Gegensatz zu den Doppelschaltfingern 6, 8, die für die ersten beiden Gassen G1 und G2 mit den unteren Aussparungen 14, 15 zusammenwirken.

Der vierte Gang wird in der Schaltgasse Gasse G3 über den ersten Einzelschaltfinger 7 geschaltet, indem dieser Einzelschaltfinger 7 in die obere Aussparung 17 des ersten Mitnehmers 2 eingreift. Der fünfte Gang wird in der gleichen Schaltgasse Gasse G3 über den zweiten Einzelschaltfinger 9 geschaltet, indem dieser Einzelschaltfinger 9 in die andere obere Aussparung 16, allerdings des zweiten Mitnehmers 3, eingreift. Obwohl in der gleichen Schaltgasse G3 liegend, werden die Gänge vier und fünf über unterschiedliche Synchronpakete angesteuert. Nach einer weiteren Wählbewegung wird in der Schaltgasse G4 schließlich der sechste Gang geschaltet, wobei der dritte Einzelschaltfinger 10 wiederum in die erste obere Aussparung 17, nun unter Beibehaltung des zweiten Mitnehmers 3, eingreift.

Die Fig. 5b zeigt ein Schaltbild 21', welches spiegelverkehrt zum Schaltbild 21 angeordnet ist. Der Schaltverlauf erfolgt sinngemäß wie zuvor beschrieben, allerdings mit einem angepasstem Aktuatorschema, welches eine andere axiale Verschiebeabfolge der Schaltfingerwelle 4 vorsieht.

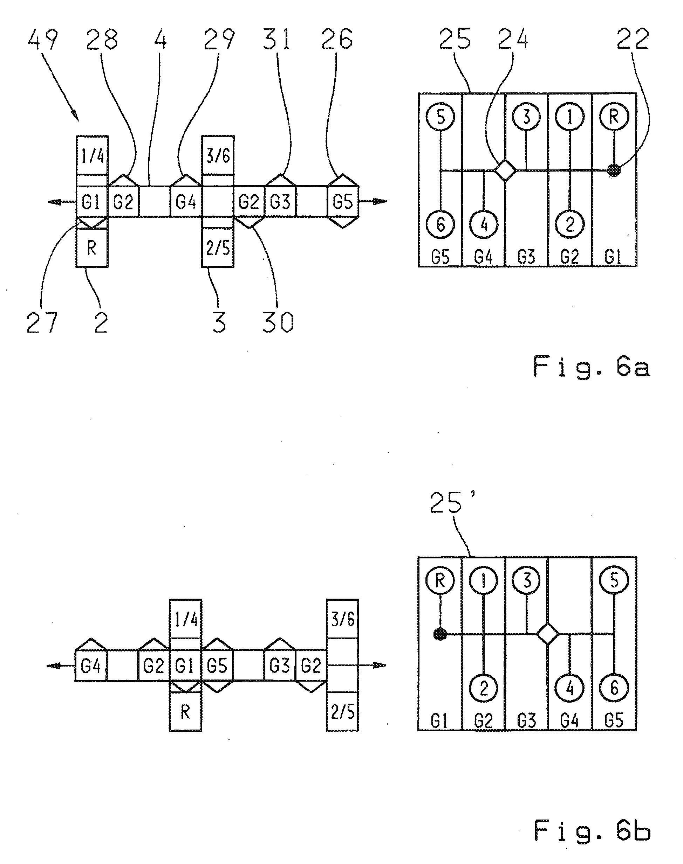

Die Fig. 6a zeigt ein Schaltbild 25 gemäß einer zweiten Variante, welches einen Doppelschaltfinger 26 und fünf Einzelschaltfinger 27, 28, 29, 30, 31 benötigt, also ein Schaltfingersystem 49 mit insgesamt sechs Schaltfingern vorsieht. Diese sechs Schaltfinger 26, 27, 28, 29, 30, 31 werden in fünf Schaltgassen G1, G2, G3, G4, G5 betätigt. In der Gasse G1 wird der Rückwärtsgang geschaltet. In der Gasse G2 erfolgen hier bereits eine Schaltrichtungsumkehr sowie eine Ansteuerung verschiedener Synchronpakete. In der folgenden Gasse G3 wird nur der dritte Vorwärtsgang geschaltet. In Wählrichtung erfolgt anschließend die Bereichsumschaltung 24. In der Gasse G4 wird nur der vierte Vorwärtsgang geschaltet. In der fünften Schaltgasse G5 werden schließlich die Gänge fünf und sechs über das gemeinsame Schaltpaket der Gänge zwei und drei mit dem Doppelschaltfinger 26 geschaltet. Das Schaltbild 25 benötigt sechs Schaltfinger anstelle von fünf Schaltfingern beim Schaltbild 21, 21', kommt dabei aber mit nur einem Doppelschaltfinger aus.

Die Fig. 6b zeigt wiederum ein zum Schaltbild 25 spiegelverkehrtes Schaltbild 25'. Der Schaltverlauf erfolgt mit einer angepassten axialen Verschiebeabfolge der Schaltfingerwelle 4 in analoger Weise.

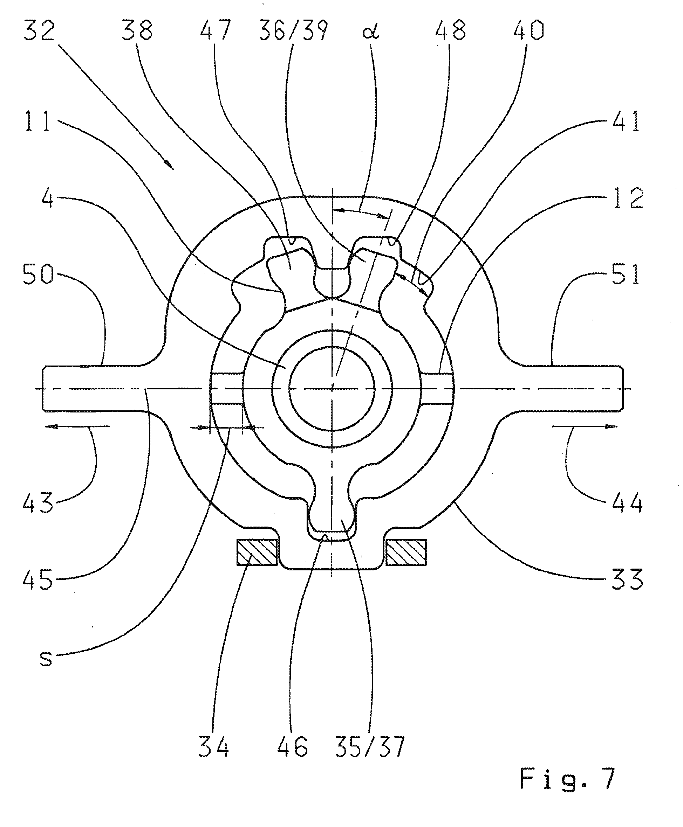

Die Fig. 7 zeigt schließlich ein weiteres Schaltfingersystem 32, welches auf das erste, in Fig. 5a und Fig. 5b dargestellte Schaltbild 21,21' anwendbar ist. Das Schaltfingersystem 32 umfasst zwei Mitnehmer 33, 34, von denen der zweite Mitnehmer in Fig. 7 lediglich angedeutet ist sowie fünf Einzelschaltfinger 35, 36, 37, 38, 39, die in Fig. 7 in einer bestimmten Reihenfolge hintereinander liegen. Die Mitnehmer 33 und 34 besitzen jeweils eine untere Aussparung 46 und zwei obere Aussparungen 47, 48, die mit entsprechenden Fingerelementen 11 der Einzelschaltfinger 35, 36, 37, 38, 39 korrespondieren, wobei für den oberen Eingriff ein begrenzter Freilauf 40 vorgesehen ist, der als eine sich an den Aussparungen 47, 48 entgegen der Schaltrichtung 43, 44 fortsetzende Freilaufkontur 41 ausgebildet ist. Die unteren Aussparungen 46 stehen senkrecht zur Verfahrachse 45, die oberen Aussparungen 47, 48 sind schräg dazu unter einem Winkel α angeordnet. In Fig. 7 sind zusätzlich zwei seitliche Schaltstangen 50, 51 angedeutet, die mit dem Mitnehmer 33 verbunden sind.

Die fünf Einzelschaltfinger 35, 36, 37, 38, 39 werden in den vier Schaltgassen G1, G2, G3, G4 über wechselnde axiale Verschiebungen und Verschwenkungen der Schaltfingerwelle 4 derart betätigt, dass wiederum ein Aktuatorschema erreicht wird, welches dem logischen Mehrfach-H-Schaltbild 21, 21' genügt, wobei anstelle von Doppelschaltfingerverschwenkungen vergleichsweise mehr Verschiebebewegungen durchgeführt werden.

### Bezugszeichenliste

- 1: Schaltfingersystem
- 2: Mitnehmer
- 3: Mitnehmer
- 4: Schaltfingerwelle
- 5: Öffnung
- 6: Doppelschaltfinger
- 7: Einzelschaltfinger
- 8: Doppelschaltfinger
- 9: Einzelschaltfinger
- 10: Einzelschaltfinger
- 11: Fingerelement
- 12: Neutralfinger
- 13: Einzelschaltfinger
- 14: Aussparung
- 15: Aussparung
- 16: Aussparung
- 17: Aussparung
- 18: Vorsprung
- 19: Pfeil
- 20: Pfeil
- 21, 21': Schaltbild
- 22: Schaltposition
- 23: Wählgasse
- 24: Bereichsumschaltung
- 25, 25': Schaltbild
- 26: Doppelschaltfinger
- 27: Einzelschaltfinger
- 28: Einzelschaltfinger
- 29: Einzelschaltfinger
- 30: Einzelschaltfinger
- 31: Einzelschaltfinger
- 32: Schaltfingersystem
- 33: Mitnehmer
- 34: Mitnehmer
- 35: Einzelschaltfinger
- 36: Einzelschaltfinger
- 37: Einzelschaltfinger
- 38: Einzelschaltfinger
- 39: Einzelschaltfinger
- 40: Freilauf
- 41: Freilaufkontur
- 42: Freilauf
- 43: Schaltrichtung
- 44: Schaltrichtung
- 45: Verfahrachse
- 46: Aussparung
- 47: Aussparung
- 48: Aussparung
- 49: Schaltfingersystem
- 50: Schaltstange
- 51: Schaltstange
- G1: Schaltgasse
- G2: Schaltgasse
- G3: Schaltgasse
- G4: Schaltgasse
- G5: Schaltgasse
- R: Rückwärtsgang
- s: Schaltweg
- α: Schaltwinkel

## Patentansprüche

1. Mehrgruppengetriebe, welches zumindest eine handschaltbare Hauptgruppe mit einer ungeraden Anzahl von Vorwärtsgängen und eine Bereichsgruppe zur Umschaltung zwischen zwei Gangbereichen aufweist, mit einem Schalthebel, dem ein Schaltbild (21, 21', 25, 25') zugeordnet ist, welches eine Wählgasse (23) und mehrere Schaltgassen (G1, G2, G3, G4, G5) mit gegenüberliegenden Gängen aufweist, über den eine Schaltfingerwelle (4), die mehrere Schaltfinger (6 - 10, 13, 26 - 31, 35 - 39) trägt, um ihre Längsachse verschwenkbar sowie axial verschiebbar ist, so dass, je nach Schalthebelbewegung, zum Schalten eines Ganges ein Schaltfinger (6 - 10, 13, 26 - 31, 35 - 39) in einen zugehörigen rahmenförmigen Mitnehmer (2, 3, 33, 34) eingreift, um ein über eine Schaltstange (50, 51) mit dem Mitnehmer (2, 3, 33, 34) gekoppeltes Schaltpaket in einer entsprechenden Schaltrichtung (43, 44) zu betätigen, und mit mechanischen Mitteln zur Umkehr der Schaltrichtung (43, 44) sowie zum Schalten von Gängen, die in einer Schaltgasse (G1, G2, G3, G4, G5) gegenüberliegen und von verschiedenen Schaltpaketen angesteuert sind, wobei die Schaltfinger (6 - 10, 13, 26 - 31, 35 - 39) als Einzelschaltfinger (7, 9, 10, 13, 27 - 31, 35 - 39) mit jeweils einem Fingerelement (11) oder als Doppelschaltfinger (6, 8, 26) mit jeweils zwei in einer Ebene liegenden, zueinander versetzt angeordneten Fingerelementen (11) ausgebildet sind, wobei die rahmenförmigen Mitnehmer (2, 3, 33, 34) oberhalb und unterhalb einer durch die Schaltstangen (50, 51) verlaufenden Verfahrachse (45) Aussparungen (14 - 17, 46-48) zum Eingreifen der Einzelschaltfinger (7, 9, 10, 13, 27 - 31, 35 - 39) oder der Doppelschaltfinger (6, 8, 26) aufweisen, wobei mittels der Fingerelemente (11) die Mitnehmer (2, 3, 33, 34) wahlweise in zwei entgegengesetzte Schaltrichtungen (43, 44) betätigbar sind und/oder eine jeweilige Schaltrichtung (43, 44) umkehrbar ist, so dass die Gänge der beiden Gangbereiche in einem Mehrfach-H-Schaltbild (21, 21' 25, 25') aufeinanderfolgend mit alternierenden Schalthebelbewegungen schaltbar sind, wobei eine Umschaltung des Gangbereichs über eine Wählbewegung des Schalthebels ansteuerbar ist, **dadurch gekennzeichnet, dass** wenigstens einer der Mitnehmer (2, 3, 33, 34) mehr als zwei der Aussparungen (14 - 17, 46 - 48) zum Eingreifen der Fingerelemente (11) der Einzelschaltfinger (7, 9, 10, 13, 27 - 31, 35-39) oder der Doppelschaltfinger (6, 8, 26) aufweist.

2. Mehrgruppengetriebe nach Anspruch 1, **dadurch gekennzeichnet, dass** bei einer Hauptgruppe mit drei Vorwärtsgängen ein Mehrfach-H-Schaltbild (21, 21' 25, 25') mit einem Schaltfingersystem (1, 32, 49) mit zwei Mitnehmern (2, 3, 33, 34) realisiert ist.

3. Mehrgruppengetriebe nach Anspruch 1 oder 2, **dadurch gekennzeichnet, dass** bei einem ersten Schaltbild (21, 21') bei einer dreistufigen Hauptgruppe in einer ersten Schaltgasse (G1) ein Rückwärtsgang (R) und ein erster Vorwärtsgang über ein gemeinsames Schaltpaket schaltbar sind, nach einer ersten Wählbewegung des Schalthebels in einer zweiten Schaltgasse (G2) ein zweiter Vorwärtsgang und ein dritter Vorwärtsgang über ein gemeinsames Schaltpaket schaltbar sind, nach einer zweiten Wählbewegung des Schalthebels mit einer Bereichsumschaltung (24) und einer Schaltrichtungsumkehr in einer dritten Schaltgasse (G3) ein vierter Vorwärtsgang und ein fünfter Vorwärtsgang über unterschiedliche Schaltpakete schaltbar sind, und nach einer dritten Wählbewegung des Schalthebels in einer vierten Schaltgasse (G4) ein sechster Vorwärtsgang schaltbar sind.

4. Mehrgruppengetriebe nach Anspruch 3, **dadurch gekennzeichnet, dass** ein Schaltfingersystem (1) des ersten Schaltbildes (21, 21') für die erste und die zweite Schaltgasse (G1, G2) jeweils einen Doppelschaltfinger (6, 8) und für die dritte und die vierte Schaltgasse (G3, G4) insgesamt drei Einzelschaltfinger (7, 9, 10) aufweist.

5. Mehrgruppengetriebe nach Anspruch 3, **dadurch gekennzeichnet, dass** ein Schaltfingersystem (32) des ersten Schaltbildes (21, 21') für die erste und die zweite Schaltgasse (G1, G2), in Betätigungsposition senkrecht zu einer Verfahrachse (45) der Mitnehmer (33, 34) stehende, unterhalb der Verfahrachse (45) ausgerichtete Einzelschaltfinger (35, 37) für einen unteren Eingriff, sowie für die dritte und die vierte Schaltgasse (G3, G4) insgesamt drei in Betätigungsposition schräg zur Verfahrach-se (45) der Mitnehmer (33, 34) stehende, oberhalb der Verfahrachse (45) angeordnete Einzelschaltfinger (36, 38, 39) für einen oberen Eingriff aufweist.

6. Mehrgruppengetriebe nach Anspruch 5, **dadurch gekennzeichnet, dass** wenigstens eine Aussparung (47, 48) für den oberen Eingriff entgegen der Schaltrichtung (43, 44) in eine, einen Freilauf (40) begrenzende Freilaufkontur (41) übergeht.

7. Mehrgruppengetriebe nach Anspruch 1 oder 2, **dadurch gekennzeichnet, dass** bei einem zweiten Schaltbild (25, 25') bei einer dreistufigen Hauptgruppe in einer ersten Schaltgasse (G1) ein Rückwärtsgang (R) schaltbar ist, nach einer ersten Wählbewegung des Schalthebels mit einer Schaltrichtungsumkehr in einer zweiten Schaltgasse (G2) ein erster Vorwärtsgang und ein zweiter Vorwärtsgang über unter-schiedliche Schaltpakete schaltbar sind, nach einer zweiten Wählbewegung des Schalthebels in einer dritten Schaltgasse (G3) ein dritter Vorwärtsgang schaltbar ist, nach einer dritten Wählbewegung des Schalthebels mit einer Bereichsumschaltung (24) in einer vierten Schaltgasse (G4) ein vierter Vorwärtsgang schaltbar ist, und nach einer vierten Wählbewegung des Schalthebels in einer fünften Schaltgasse (G5) ein fünfter Vorwärtsgang und ein sechster Vorwärtsgang über ein gemeinsames Schaltpaket schaltbar sind.

8. Mehrgruppengetriebe Anspruch 7, **dadurch gekennzeichnet, dass** ein Schaltfingersystem (49) des zweiten Schaltbildes (25, 25') für die fünfte Schaltgasse (G5) einen Doppelschaltfinger (26) und für die übrigen vier Schaltgassen (G1, G2, G3, G4) insgesamt fünf Einzelschaltfinger (27 - 31) aufweist.

9. Mehrgruppengetriebe nach einem der Ansprüche 1 bis 8, **dadurch gekennzeichnet, dass** die Schaltfinger (6 - 10, 13, 26 - 31, 35 - 39) als auf der Schaltfingerwelle (4) befestigte Ringe, die mit ihren Fingerelementen (11) einstückig verbunden sind, ausgebildet sind, wobei die Fingerelemente (11) nasenartig radial nach außen vorstehen, und dass die Mitnehmer (2, 3, 33, 34) kreisförmige Öffnungen (5) zur Aufnahme der Schaltfingerwelle (4) aufweisen, an denen die Aussparungen (14-17, 46 - 48) zum Eingriff der Fingerelemente (11) ausgebildet sind.

10. Mehrgruppengetriebe nach einem der Ansprüche 1 bis 9, **dadurch gekennzeichnet, dass** wenigstens ein Mitnehmer (33) eine Aussparung (46) unterhalb sowie zwei Aussparungen (47, 48) oberhalb seiner Verfahrachse (45) aufweist.

11. Mehrgruppengetriebe nach einem der Ansprüche 1 bis 10, **dadurch gekennzeichnet, dass** wenigstens ein Mitnehmer (2, 3) vier Aussparungen (14, 15, 16, 17) für einen Doppelschaltfinger (6, 8, 26) besitzt, wobei zwei Aussparungspaare (14/15, 16/17) oberhalb und unterhalb einer Verfahrachse (45) des Mitnehmers (2, 3) gegenüberliegend angeordnet sind, so dass durch Eingreifen des Doppelschaltfingers (6, 8, 26) in das eine Aussparungspaar (14/15, 16/17), der Mitnehmer (2, 3) bei einer Rechts- oder einer Linksverschwenkung der Schaltfingerwelle (4) in die eine oder die andere Schaltrichtung (43, 44) bewegt wird, und dass durch Eingreifen des Doppelschaltfingers (6, 8, 26) in das andere Aussparungspaar (14/15, 16/17) der Mitnehmer (2, 3) bei einer Rechts- oder einer Linksverschwenkung der Schaltfinger" welle (4) im umgekehrte Sinn in die eine oder die andere Schaltrichtung (43, 44) bewegt wird.

12. Mehrgruppengetriebe nach einem der Ansprüche 1 bis 11, **dadurch gekennzeichnet, dass** oberhalb oder unterhalb der Verfahrachse (45) der Mitnehmer (2, 3, 33, 34) zueinander benachbart angeordnete Aussparungen (14/15, 16/17) durch einen nach radial innen verlängerten zahnartigen Vorsprung (18) zur Beaufschlagung in eine jeweilige Schaltrichtung (43, 44) getrennt sind.

13. Mehrgruppengetriebe nach einem der Ansprüche 1 bis 12, **dadurch gekennzeichnet, dass** an den Einzelschaltfingern (7, 9, 10, 13, 27 - 31, 35 - 39) und an den Doppelschaltfingern (6, 8, 26) wenigstens ein Neutralfinger (12) ausgebildet ist, an den sich zur Sicherung einer Neutralposition die Wand der Öffnung (5) des zugeordneten Mitnehmers (2, 3, 33, 34) in einem eingriffslosen Zustand anlehnen kann.

14. Mehrgruppengetriebe nach einem der Ansprüche 1 bis 13, **dadurch gekennzeichnet, dass** sie zum Schalten eines 12-Gang-Mehrgruppengetriebes mit einer dreistufigen Hauptgruppe, einer zweistufigen Bereichsgruppe und einer zweistufigen Splitgruppe ausgebildet ist, wobei die über das Mehrfach-H-Schaltbild (21, 21' 25, 25') schaltbaren Gänge durch ein Umschalten zweier Eingangskonstanten der Split-gruppe des Mehrgruppengetriebes mittels eines separaten Bedienelementes jeweils in zwei Übersetzungsstufen unterteilbar sind.

## Claims

1. Multi-group transmission, which has at least one manually shiftable main group having an odd number of forward gears and a range group for changeover between two gear ranges, with a shift lever which is assigned a shift pattern (21, 21', 25, 25') which has a selection slot (23) and a plurality of shift slots (G1, G2, G3, G4, G5) with opposite gears, by which shift lever a shift-finger shaft (4), which carries a plurality of shift fingers (6-10, 13, 26-31, 35-39), can be pivoted about its longitudinal axis and can be displaced axially, such that, depending on the shift-lever movement, for shifting a gear, a shift finger (6-10, 13, 26-31, 35-39) engages into an associated frame-shaped dog (2, 3, 33, 34), in order to actuate a shift assembly, coupled to the dog (2, 3, 33, 34) via a shift rod (50, 51), in a corresponding shift direction (43, 44), and with mechanical means for reversing the shift direction (43, 44) and for shifting gears which lie opposite one another in a shift slot (G1, G2, G3, G4, G5) and are activated by different shift assemblies, the shift fingers (6-10, 13, 26-31, 35-39) being designed as single shift fingers (7, 9, 10, 13, 27-31, 35-39), each with one finger element (11), or as double shift fingers (6, 8, 26), each with two finger elements (11) lying in one plane and arranged so as to be offset to one another, the frame-shaped dogs (2, 3, 33, 34) having, above and below a movement axis (45) running through the shift rods (50, 51), recesses (14-17, 46-48) for the engagement of the single shift fingers (7, 9, 10, 13, 27-31, 35-39) or of the double shift fingers (6, 8, 26), by means of the finger elements (11) the dogs (2, 3, 33, 34) being actuable selectively in two opposite shift directions (43, 44) and/or a respective shift direction (43, 44) being reversible, such that the gears of the two gear ranges can be shifted successively in a multiple H-shift pattern (21, 21', 25, 25') by means of alternating shift-lever movements, a changeover of the gear range being activatable via a selection movement of the shift lever, **characterized in that** at least one of the dogs (2, 3, 33, 34) has more than two of the recesses (14-17, 46-48) for the engagement of the finger elements (11) of the single shift fingers (7, 9, 10, 13, 27-31, 35-39) or of the double shift fingers (6, 8, 26).

2. Multi-group transmission according to Claim 1, **characterized in that**, in the case of a main group with three forward gears, a multiple H-shift pattern (21, 21', 25, 25') is implemented by means of a shift-finger system (1, 32, 49) having two dogs (2, 3, 33, 34).

3. Multi-group transmission according to Claim 1 or 2, **characterized in that**, in the case of a first shift pattern (21, 21'), in a three-stage main group, in a first shift slot (G1) a reverse gear (R) and a first forward gear can be shifted via a common shift assembly, after a first selection movement of the shift lever, a second forward gear and a third forward gear can be shifted in a second shift slot (G2) via a common shift assembly, after a second selection movement of the shift lever, with range changeover (24) and with shift-direction reversal, a fourth forward gear and a fifth forward gear can be shifted in a third shift slot (G3) via different shift assemblies, and after a third selection movement of the shift lever a sixth forward gear can be shifted in a fourth shift slot (G4).

4. Multi-group transmission according to Claim 3, **characterized in that** a shift-finger system (1) of the first shift pattern (21, 21') has in each case a double shift finger (6, 8) for the first and the second shift slot (G1, G2) and overall three single shift fingers (7, 9, 10) for the third and the fourth shift slot (G3, G4).

5. Multi-group transmission according to Claim 3, **characterized in that** a shift-finger system (32) of the first shift pattern (21, 21') has for the first and the second shift slot (G1, G2) single shift fingers (35, 37), standing perpendicularly to a movement axis (45) of the dogs (33, 34) in the actuation position and oriented below the movement axis (45), for lower engagement, and has for the third and the fourth shift slot (G3, G4) overall three single shift fingers (36, 38, 39), standing obliquely to the movement axis (45) of the dogs (33, 34) in the actuation position and arranged above the movement axis (45), for upper engagement.

6. Multi-group transmission according to Claim 5, **characterized in that** at least one recess (47, 48) for upper engagement merges opposite to the shift direction (43, 44) into a freewheel contour (41) delimiting freewheel (40).

7. Multi-group transmission according to Claim 1 or 2, **characterized in that**, in the case of a second shift pattern (25, 25'), in a three-stage main group, in a first shift slot (G1) a reverse gear (R) can be shifted, after a first selection movement of the shift lever, with shift-direction reversal, a first forward gear and a second forward gear can be shifted in a second shift slot (G2) via different shift assemblies, after a second selection movement of the shift lever a third forward gear can be shifted in a third shift slot (G3), after a third selection movement of the shift lever, with range changeover (24), a fourth forward gear can be shifted in a fourth shift slot (G4), and after a fourth selection movement of the shift lever a fifth forward gear and a sixth forward gear can be shifted in a fifth shift slot (G5) via a common shift assembly.

8. Multi-group transmission according to Claim 7, **characterized in that** a shift-finger system (49) of the second shift pattern (25, 25') has a double shift finger (26) for the fifth shift slot (G5) and overall five single shift fingers (27-31) for the other four shift slots (G1, G2, G3, G4).

9. Multi-group transmission according to one of Claims 1 to 8, **characterized in that** the shift fingers (6-10, 13, 26-31, 35-39) are designed as rings which are fastened to the shift-finger shaft (4) and are connected in one piece to their finger elements (11), the finger elements (11) projecting radially outwards in a nose-like manner, and **in that** the dogs (2, 3, 33, 34) have circular orifices (5) for receiving the shift-finger shaft (4), on which orifices the recesses (14-17, 46-48) for the engagement of the finger elements (11) are formed.

10. Multi-group transmission according to one of Claims 1 to 9, **characterized in that** at least one dog (33) has one recess (46) below, and two recesses (47, 48) above, its movement axis (45).

11. Multi-group transmission according to one of Claims 1 to 10, **characterized in that** at least one dog (2, 3) possesses four recesses (14, 15, 16, 17) for a double shift finger (6, 8, 26), two pairs of recesses (14/15, 16/17) being arranged opposite one another above and below a movement axis (45) of the dog (2, 3), such that, by the engagement of the double shift finger (6, 8, 26) into one pair of recesses (14/15, 16/17), the dog (2, 3) is moved in one or the other shift direction (43, 44) upon a pivoting of the shift-finger shaft (4) to the right or to the left, and **in that**, by the engagement of the double shift finger (6, 8, 26) into the other pair of recesses (14/15, 16/17), the dog (2, 3) is moved in one or the other shift direction (43, 44) in reverse upon a pivoting of the shift-finger shaft (4) to the right or to the left.

12. Multi-group transmission according to one of Claims 1 to 11, **characterized in that**, above or below the movement axis (45) of the dogs (2, 3, 33, 34), recesses (14/15, 16/17) arranged adjacently to one another are separated by a radially inward-prolonged tooth-like projection (18) for action in a respective shift direction (43, 44).

13. Multi-group transmission according to one of Claims 1 to 12, **characterized in that**, on the single shift fingers (7, 9, 10, 13, 27-31, 35-39) and on the double shift fingers (6, 8, 26), at least one neutral finger (12) is formed, against which the wall of the orifice (5) of the assigned dog (2, 3, 33, 34) can come to bear in an unengaged state in order to secure a neutral position.

14. Multi-group transmission according to one of Claims 1 to 13, **characterized in that** it is designed for shifting a 12-gear multi-group transmission with a three-stage main group, a two-stage range group and a two-stage split group, the gears shiftable via the multiple H-shift pattern (21, 21', 25, 25') being subdivisible in each case into two step-up stages by means of a separate operating element as a result of a changeover of two input constants of the split group of the multi-group transmission.

## Revendications

1. Boîte de vitesses à plusieurs groupes, présentant au moins un groupe principal pouvant être commuté manuellement avec un nombre impair de rapports de marche avant et un groupe-relais pour commuter entre deux plages de rapports, avec un levier de vitesses auquel est associé un dessin des vitesses (21, 21', 25, 25') qui présente une voie de sélection (23) et plusieurs voies de changement de vitesses (G1, G2, G3, G4, G5) avec des rapports opposés, par le biais duquel levier de vitesses un arbre de doigts de commutation (4) qui porte plusieurs doigts de commutation (6-10, 13, 26-31, 35-39) peut être pivoté autour de son axe longitudinal et déplacé axialement de telle sorte qu'en fonction du mouvement du levier de vitesses, pour changer une vitesse, un doigt de commutation (6-10, 13, 26-31, 35-39) vienne en prise dans un dispositif d'entraînement associé en forme de cadre (2, 3, 33, 34) afin d'actionner un paquet de commutation accouplé au dispositif d'entraînement (2, 3, 33, 34) par le biais d'une tige de commutation (50, 51) dans un sens de commutation correspondant (43, 44), et avec des moyens mécaniques pour inverser le sens de commutation (43, 44) et pour changer des vitesses qui sont opposées dans une voie de changement de vitesses (G1, G2, G3, G4, G5) et qui sont commandées par différents paquets de commutation, les doigts de commutation (6-10, 13, 26-31, 35-39) étant réalisés sous forme de doigts de commutation individuels (7, 9, 10, 13, 27-31, 35-39) avec à chaque fois un élément de doigt (11) ou sous forme de doigts de commutation doubles (6, 8, 26) avec à chaque fois deux éléments de doigt (11) disposés de manière décalée l'un par rapport à l'autre dans un plan, les dispositifs d'entraînement en forme de cadre (2, 3, 33, 34) présentant, au-dessus et en dessous d'un axe de déplacement (45) s'étendant à travers les tiges de commutation (50, 51), des évidements (14-17, 46-48) pour venir en prise avec les doigts de commutation individuels (7, 9, 10, 13, 27-31, 35-39) ou avec les doigts de commutation doubles (6, 8, 26), les dispositifs d'entraînement (2, 3, 33, 34) pouvant être actionnés au moyen des éléments de doigt (11) de manière sélective dans deux sens de commutation opposés (43, 44) et/ou un sens de commutation respectif (43, 44) pouvant être inversé de telle sorte que les rapports des deux plages de rapports puissent être commutés successivement avec des mouvements alternés du levier de vitesses dans un dessin des vitesses multiple en H (21, 21', 25, 25'), une commutation de la plage de rapports pouvant être commandée par le biais d'un mouvement de sélection du levier de vitesses, **caractérisée en ce qu'**au moins l'un des dispositifs d'entraînement (2, 3, 33, 34) présente plus de deux des évidements (14-17, 46-48) pour venir en prise avec les éléments de doigt (11) des doigts de commutation individuels (7, 9, 10, 13, 27-31, 35-39) ou des doigts de commutation doubles (6, 8, 26).

2. Boîte de vitesses à plusieurs groupes selon la revendication 1, **caractérisée en ce que** dans le cas d'un groupe principal avec trois rapports de marche avant, un dessin des vitesses multiple en H (21, 21', 25, 25') est réalisé avec un système de doigts de commutation (1, 32, 49) avec deux dispositifs d'entraînement (2, 3, 33, 34).

3. Boîte de vitesses à plusieurs groupes selon la revendication 1 ou 2, **caractérisée en ce que** dans le cas d'un premier dessin des vitesses (21, 21') dans un groupe principal à trois étages, dans une première voie de changement de vitesses (G1), un rapport de marche arrière (R) et un premier rapport de marche avant peuvent être commutés par le biais d'un paquet de commutation commun, après un premier mouvement de sélection du levier de vitesses dans une deuxième voie de changement de vitesses (G2), un deuxième rapport de marche avant et un troisième rapport de marche avant peuvent être commutés par le biais d'un paquet de commutation commun, après un deuxième mouvement de sélection du levier de vitesses avec changement de plage (24) et inversion du sens de commutation, dans une troisième voie de changement de vitesses (G3), un quatrième rapport de marche avant et un cinquième rapport de marche avant peuvent être commutés par le biais de différents paquets de commutation, et après un troisième mouvement de sélection du levier de vitesses dans une quatrième voie de changement de vitesses (G4), un sixième rapport de marche avant peut être commuté.

4. Boîte de vitesses à plusieurs groupes selon la revendication 3, **caractérisée en ce qu'**un système de doigts de commutation (1) du premier dessin des vitesses (21, 21') pour la première et la deuxième voie de changement de vitesses (G1, G2) présente à chaque fois un doigt de commutation double (6, 8) et, pour la troisième et la quatrième voie de changement de vitesses (G3, G4), dans l'ensemble trois doigts de commutation individuels (7, 9, 10).

5. Boîte de vitesses à plusieurs groupes selon la revendication 3, **caractérisée en ce qu'**un système de doigts de commutation (32) du premier dessin des vitesses (21, 21') pour la première et la deuxième voie de changement de vitesses (G1, G2) présente des doigts de commutation individuels (35, 37) disposés dans la position d'actionnement perpendiculairement à un axe de déplacement (45) des dispositifs d'entraînement (33, 34) et orientés sous l'axe de déplacement (45) pour un engagement inférieur, et, pour la troisième et la quatrième voie de changement de vitesses (G3, G4), présente dans l'ensemble trois doigts de commutation individuels (36, 38, 39) disposés au-dessus de l'axe de déplacement (45) dans la position d'actionnement obliquement par rapport à l'axe de déplacement (45) des dispositifs d'entraînement (33, 34), pour un engagement supérieur.

6. Boîte de vitesses à plusieurs groupes selon la revendication 5, **caractérisée en ce qu'**au moins un évidement (47, 48) pour l'engagement supérieur dans le sens opposé au sens de commutation (43, 44) se prolonge par un contour de déplacement en roue libre (41) limitant un déplacement en roue libre (40).

7. Boîte de vitesses à plusieurs groupes selon la revendication 1 ou 2, **caractérisée en ce que** dans un deuxième dessin des vitesses (25, 25') dans le cas d'un groupe principal à trois étages, dans une première voie de changement de vitesses (G1), un rapport de marche arrière (R) peut être commuté, après un premier mouvement de sélection du levier de vitesses avec inversion du sens de commutation, dans une deuxième voie de changement de vitesses (G2), un premier rapport de marche avant et un deuxième rapport de marche avant peuvent être commutés par le biais de différents paquets de commutation, après un deuxième mouvement de sélection du levier de vitesses dans une troisième voie de changement de vitesses (G3), un troisième rapport de marche avant peut être commuté, après un troisième mouvement de sélection du levier de vitesses avec changement de plage (24) dans une quatrième voie de changement de vitesses (G4), un quatrième rapport de marche avant peut être commuté et après un quatrième mouvement de sélection du levier de vitesses dans une cinquième voie de changement de vitesses (G5), un cinquième rapport de marche avant et un sixième rapport de marche avant peuvent être commutés par le biais d'un paquet de commutation commun.

8. Boîte de vitesses à plusieurs groupes selon la revendication 7, **caractérisée en ce qu'**un système de doigts de commutation (49) du deuxième dessin des vitesses (25, 25') pour la cinquième voie de changement de vitesses (G5) présente un doigt de commutation double (26) et pour les quatre autres voies de changement de vitesses (G1, G2, G3, G4), dans l'ensemble cinq doigts de commutation individuels (27-31).

9. Boîte de vitesses à plusieurs groupes selon l'une quelconque des revendications 1 à 8, **caractérisée en ce que** les doigts de commutation (6-10, 13, 26-31, 35-39) sont réalisés sous forme de bagues fixées sur l'arbre de doigts de commutation (4), lesquelles sont connectées d'une seule pièce à leurs éléments de doigt (11), les éléments de doigt (11) faisant saillie radialement vers l'extérieur à la manière de nez, et **en ce que** les dispositifs d'entraînement (2, 3, 33, 34) présentent des ouvertures circulaires (5) pour recevoir l'arbre de doigts de commutation (4), au niveau desquelles ouvertures sont réalisés les évidements (14-17, 46-48) pour venir en prise avec les éléments de doigt (11).

10. Boîte de vitesses à plusieurs groupes selon l'une quelconque des revendications 1 à 9, **caractérisée en ce qu'**au moins un dispositif d'entraînement (33) présente un évidement (46) en dessous de son axe de déplacement (45) ainsi que deux évidements (47, 48) au-dessus de son axe de déplacement (45).

11. Boîte de vitesses à plusieurs groupes selon l'une quelconque des revendications 1 à 10, **caractérisée en ce qu'**au moins un dispositif d'entraînement (2, 3) présente quatre évidements (14, 15, 16, 17) pour un doigt de commutation double (6, 8, 26), deux paires d'évidements (14/15, 16/17) étant disposées à l'opposé l'une de l'autre au-dessus et en dessous d'un axe de déplacement (45) du dispositif d'entraînement (2, 3), de sorte que par l'engagement du doigt de commutation double (6, 8, 26) dans l'une des paires d'évidements (14/15, 16/17), le dispositif d'entraînement (2, 3) soit déplacé dans l'un ou l'autre sens de commutation (43, 44) dans le cas d'un pivotement vers la droite ou vers la gauche de l'arbre de doigts de commutation (4), et **en ce que** par l'engagement du doigt de commutation double (6, 8, 26) dans l'autre paire d'évidements (14/15, 16/17), le dispositif d'entraînement (2, 3) soit déplacé dans le sens inverse dans l'un ou l'autre sens de commutation (43, 44) dans le cas d'un pivotement vers la droite ou vers la gauche de l'arbre de doigts de commutation (4).

12. Boîte de vitesses à plusieurs groupes selon l'une quelconque des revendications 1 à 11, **caractérisée en ce que** des évidements (14/15, 16/17) disposés les uns à côté des autres au-dessus ou en dessous de l'axe de déplacement (45) des dispositifs d'entraînement (2, 3, 33, 34) sont séparés par une saillie (18) prolongée radialement vers l'intérieur en forme de dent en vue de la sollicitation dans un sens de commutation respectif (43, 44).

13. Boîte de vitesses à plusieurs groupes selon l'une quelconque des revendications 1 à 12, **caractérisée en ce qu'**au moins un doigt neutre (12) est réalisé au niveau des doigts de commutation individuels (7, 9, 10, 13, 27-31, 35-39) et au niveau des doigts de commutation doubles (6, 8, 26), contre lequel peut s'appuyer, pour assurer une position neutre, la paroi de l'ouverture (5) du dispositif d'entraînement associé (2, 3, 33, 34) dans un état sans engagement.

14. Boîte de vitesses à plusieurs groupes selon l'une quelconque des revendications 1 à 13, **caractérisée en ce qu'**elle est réalisée pour commuter une boîte de vitesses à plusieurs groupes à 12 rapports avec un groupe principal à trois étages, un groupe-relais à deux étages et un doubleur de gamme à deux étages, les rapports pouvant être commutés par le biais du dessin des vitesses multiple en H (21, 21', 25, 25') pouvant être divisés à chaque fois en deux étages de transmission par un changement de deux constantes d'entrée du doubleur de gamme de la boîte de vitesses à plusieurs groupes au moyen d'un élément de commande séparé.
